# EUROPEAN PATENT APPLICATION

(11) **EP 4 578 887 A1**
(43) Date of publication of application: **02.07.2025**
(21) Application number: 23874901.4
(22) Date of filing: 04.10.2023
(51) Int. Cl.: C08G 18/10, B01D 63/00, B01D 63/02, C08G 18/42, C08G 18/76, C08G 18/79, C09K 3/10

(54) **POLYURETHANE-RESIN-FORMING COMPOSITION, AND FILM SEALING MATERIAL AND FILM MODULE EACH OBTAINED USING SAID POLYURETHANE-RESIN-FORMING COMPOSITION**

(30) Priority: 07.10.2022 JP 2022162812
(71) Applicant: Tosoh Corporation, Yamaguchi 746-8501 (JP)
(72) Inventor: YOSHIDA, Kouji, Shanghai P.R., 201512 (CN); IKEMOTO, Mitsushige, Yokkaichi-shi, Mie 510-8540 (JP)
(74) Representative: TBK
(86) International application number: PCT/JP2023/036206
(87) International publication number: WO 2024/075775

(57) **Abstract**

A polyurethane-resin-forming composition including a polyisocyanate prepolymer (A) and a polyol (B) is disclosed. The polyisocyanate prepolymer (A) contains a reaction product of diphenylmethane diisocyanate (a1-1) and/or modified diphenylmethane diisocyanate (a1-2), and an active hydrogen-containing compound (a2), the polyol (B) includes a transesterification product (b1) of a castor oil-based polyol and a hydroxyl group-containing amine-based compound, a hydroxyl group-containing amine-based compound (b2), and a castor oil-based polyol (b3), a content of the transesterification product (b 1) is 0.1 mass% or more and 10 mass% or less with respect to a total mass of the polyisocyanate prepolymer (A) and the polyol (B).

## Description

### Technical Field

The present disclosure relates to a polyurethane-resin-forming composition, and a membrane sealing material and a membrane module using the polyurethane-resin-forming composition.

### Background Art

A polyurethane-resin-forming composition obtained from an isocyanate component and a polyol component can react at normal temperature, and is excellent in moldability, adhesiveness, chemical resistance, and mechanical physical properties, and therefore is widely used in various fields as a sealing material or the like.

Here, when a modified diphenylmethane diisocyanate is used as a main agent and a castor oil-based polyol and an amine-initiated polyalkylene polyol (hydroxyl group-containing amine-based compound) are used, there is a problem that the appearance of the cured product of the polyurethane-resin-forming composition is whitened due to blending. When a sealing material whose appearance is whitened is used, the inside of the sealing material cannot be visually confirmed from the outside. For example, when the sealing material is used in a dialyzer, it is difficult to find leakage of dialysate or blood.

In view of such a problem, Patent Literature 1 discloses a polyurethane-resin-forming composition containing a castor oil-based polyol, a polyoxyethylene polypropylene aliphatic polyamine, and a polyoxypropylene aliphatic polyamine in a specific content ratio in a polyol component.

### Citation List

### Patent Literature

Patent Literature 1: WO 2017/006650 A

### Summary of Invention

### Technical Problem

However, the composition according to Patent Literature 1 has a problem that the cured product becomes turbid when the amount of oxyethylene in the aliphatic polyamine increases.

Therefore, one aspect of the present disclosure is directed to providing a polyurethane-resin-forming composition that contributes to production of a cured product having good rapid curability and suppressed appearance whitening. Another aspect of the present disclosure is directed to providing a membrane sealing material and a membrane module having a good appearance.

### Solution to Problem

According to each aspect of the present disclosure, the following embodiments[1] to [8] are provided.
[1]: A polyurethane-resin-forming composition including a polyisocyanate prepolymer (A) and
   a polyol (B),
   wherein the polyisocyanate prepolymer (A) contains a reaction product of
   diphenylmethane diisocyanate (a1-1) and/or modified diphenylmethane diisocyanate (a1-2), and
   an active hydrogen-containing compound (a2),
   the polyol (B) includes
   a transesterification product (b1) of a castor oil-based polyol and a hydroxyl group-containing amine-based compound,
   a hydroxyl group-containing amine-based compound (b2), and
   a castor oil-based polyol (b3),
   a content of the transesterification product (b1) is 0.1 mass% or more and 10 mass% or less with respect to a total mass of the polyisocyanate prepolymer (A) and the polyol (B).
[2]: The polyurethane-resin-forming composition according to [1], wherein the polyisocyanate prepolymer (A) has a urethane group concentration of 0.1 mmol/g or more.
[3]: The polyurethane-resin-forming composition according to [1] or [2], wherein the reaction product includes at least a reaction site between a modified diphenylmethane diisocyanate (a1-2) containing a carbodiimide-modified diphenylmethane diisocyanate and a uretonimine-modified diphenylmethane diisocyanate and an active hydrogen-containing compound (a2).
[4]: The polyurethane-resin-forming composition according to any one of [1] to [3], which is for a membrane sealing material.
[5]: A membrane sealing material including a cured product of the polyurethane-resin-forming composition according to [4].
[6]: A membrane module including:
   a main body;
   a membrane; and
   a membrane sealing material that seals a gap between the main body and the membrane,
   wherein the membrane sealing material is the membrane sealing material according to [5].
[7]: The membrane module according to [6], wherein
   the membrane is a plurality of hollow fiber membranes,
   the membrane sealing material seals the gap between the main body and at least a part of the plurality of hollow fiber membranes, and at least a part of a gap between the hollow fiber membranes.

### Advantageous Effects of Invention

One aspect of the present disclosure is directed to providing a polyurethane-resin-forming composition that contributes to formation of a cured product having good rapid curability and suppressed appearance whitening. Another aspect of the present disclosure is directed to providing a membrane sealing material and a membrane module having a good appearance.

### Brief Description of Drawings

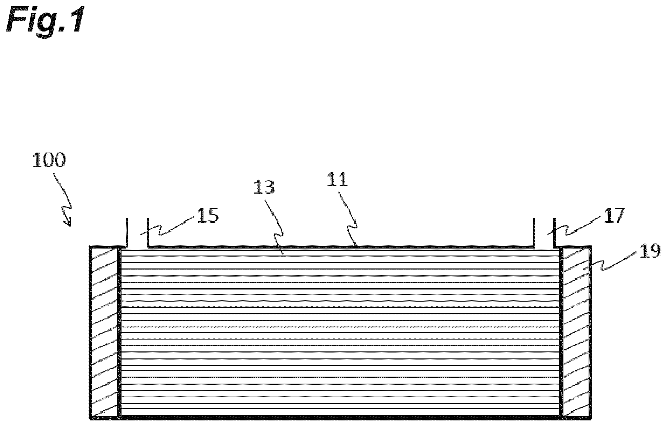

FIG. 1 is a conceptual diagram showing an example of a configuration of a membrane module according to an embodiment of the present disclosure.

### Description of Embodiments

Hereinafter, exemplary embodiments for implementing aspects of the present disclosure will be described in more detail. However, the present disclosure is not limited to the following embodiments. In the present specification, a numerical range indicated by using "to" indicates a range including numerical values described before and after "to" as a minimum value and a maximum value, respectively. In the numerical range described in the present specification, the upper limit value or the lower limit value of the numerical range may be replaced with a value shown in Examples. The upper limit and the lower limit described individually can be arbitrarily combined.

### [Polyurethane-resin-forming Composition]

A polyurethane-resin-forming composition according to an embodiment of the present disclosure includes a polyisocyanate prepolymer (A) and a polyol (B).

### <Polyisocyanate Prepolymer (A)>

The polyisocyanate prepolymer (A) contains a reaction product of diphenylmethane diisocyanate (a1-1) and/or a modified diphenylmethane diisocyanate (a1-2) with an active hydrogen-containing compound (a2).

### <<Diphenylmethane Diisocyanate (a1-1)>>

As diphenylmethane diisocyanate (a1-1), a monomer of any commonly available diphenylmethane diisocyanate (Hereinafter, also referred to as MDI.) can be used. The MDI monomer usually contains 0 mass% or more and 5 mass% or less of 2,2'-MDI, 0 mass% or more and 95 mass% or less of 2,4'-MDI, and 5 mass% or more and 100 mass% or less of 4,4'-MDI. Here, MDI defines 4,4'-MDI as a main component, and defines 2,2' -MDI and 2,4'-MDI as isomer components.

The amount of diphenylmethane diisocyanate (a1-1) used may be 1.0 part by mass or more, 2.0 parts by mass or more, 3.0 parts by mass or more, or 4.0 parts by mass or more, and may be 40.0 parts by mass or less, 30.0 parts by mass or less, 10.0 parts by mass or less, 8.0 parts by mass or less, or 6.0 parts by mass or less, with respect to 100 parts by mass of the total of the mass of diphenylmethane diisocyanate (a1-1), the mass of the modified diphenylmethane diisocyanate (a1-2), and the mass of the active hydrogen-containing compound (a2).

### <<Modified Diphenylmethane Diisocyanate (a1-2)>>

The modified diphenylmethane diisocyanate (a1-2) is not particularly limited, and examples thereof include modified urethane of MDI, modified carbodiimide, polymeric products, modified urea, modified allophanate, modified biuret, modified uretonimine, modified uretdione, and the like. As the modified diphenylmethane diisocyanate (a1-2), various modified products may be used singly or in combination of two or more kinds thereof.

The modified diphenylmethane diisocyanate (a1-2) may contain at least one modified product selected from the group consisting of carbodiimide-modified diphenylmethane diisocyanate and uretonimine-modified diphenylmethane diisocyanate.

The amount of the modified diphenylmethane diisocyanate (a1-2) used may be 25.0 parts by mass or more, 35.0 parts by mass or more, 45.0 parts by mass or more, 55.0 parts by mass or more, 65.0 parts by mass or more, or 75.0 parts by mass or more, and may be 95.0 parts by mass or less, or 90.0 parts by mass or less, with respect to 100 parts by mass of the total of the diphenylmethane diisocyanate (a1-1), the modified diphenylmethane diisocyanate (a1-2), and the active hydrogen-containing compound (a2).

### <<Reaction Product>>

The reaction product preferably includes at least a reaction site between a modified diphenylmethane diisocyanate (a1-2) containing a carbodiimide-modified diphenylmethane diisocyanate and a uretonimine-modified diphenylmethane diisocyanate and an active hydrogen-containing compound (a2).

### <<Active Hydrogen-containing Compound (a2)>>

The active hydrogen-containing compound (a2) is not particularly limited as long as it is a compound containing active hydrogen. Examples of the active hydrogen-containing compound (a2) include polyols such as castor oil-based polyols (castor oil, partially dehydrated castor oil, castor oil-modified polyol), low molecular weight polyols, polyether-based polyols, polyester-based polyols, polylactone-based polyols, and polyolefin-based polyols.

Examples of the castor oil-based polyol include castor oil, partially dehydrated castor oil, and castor oil-based modified polyol. The partially dehydrated castor oil is a dehydration reaction product of castor oil, and is obtained by removing at least a part of hydroxy groups in castor oil. Examples of the castor oil-based modified polyol include linear or branched castor oil-based polyols obtained by reaction of castor oil or a castor oil fatty acid with at least one polyol selected from the group consisting of low molecular weight polyols and polyether polyols. Specific examples include diglycerides and monoglycerides of castor oil fatty acids; mono-, di- and triesters of castor oil fatty acids with trimethylolalkanes; mono-, di- and triesters of castor oil fatty acids and polypropylene glycol; and the like.

The main component of castor oil is triglyceride of ricinoleic acid, and examples of the castor oil include hydrogenated castor oil. The main component of the castor oil fatty acid is ricinoleic acid, and examples of the castor oil fatty acid include hydrogenated castor oil fatty acid.

Examples of the trimethylolalkane include trimethylolmethane, trimethylolethane, trimethylolpropane, trimethylolbutane, trimethylolpentane, trimethylolhexane, trimethylolheptane, trimethyloloctane, trimethylolnonane, and trimethyloldecane.

The number average molecular weight of the castor oil-based polyol is preferably 400 or more and 3000 or less, and more preferably 500 or more and 2500 or less. When the number average molecular weight of the castor oil-based polyol is 400 or more and 3000 or less, a cured resin further excellent in physical properties, particularly mechanical properties, required for the membrane sealing material can be formed.

The "number average molecular weight" in the present specification is a trifunctional polypropylene polyol equivalent value measured by GPC (gel permeation chromatography). Details of the measurement conditions are as follows.

### (Measurement Conditions of Number Average Molecular Weight)

(1) Measuring apparatus: "HLC-8120 (trade name)" (manufactured by Tosoh Corporation)
(2) Column: Four columns packed with two TSKgel G2000HXL and two TSKgel G3000HXL(All are trade names, manufactured by Tosoh Corporation) as fillers are connected in series.
(3) Column temperature: 40°C
(4) Detector: RI (refractive index) meter
(5) Eluent: tetrahydrofuran (THF) (Flow rate: 1 mL/min., 40°C)
(6) Calibration curve: A calibration curve was obtained using trifunctional polypropylene polyol of the following trade names (all manufactured by Sanyo Chemical Industries, Ltd.).
   - "SANNIX GP-250" (number average molecular weight = 250)
   - "SANNIX GP-400" (number average molecular weight = 400)
   - "SANNIX GP-600" (number average molecular weight = 600)
   - "SANNIX GP-1000" (number average molecular weight = 1000)
   - "SANNIX GP-3000" (number average molecular weight = 3000)
   - "SANNIX GP-4000" (number average molecular weight = 4000)
   - "SANNIX GP-5000" (number average molecular weight = 5000)
(7) Sample solution: THF 10mL solution containing 0.05 g of a sample

The castor oil-based polyol may have an average hydroxyl value of 20 mgKOH/g or more and 350 mgKOH/g or less, preferably 20 mgKOH/g or more and 300 mgKOH/g or less, and more preferably 40 mgKOH/g or more and 250 mgKOH/g or less. When the average hydroxyl value is 20 mgKOH/g or more and 300 mgKOH/g or less, a cured resin further excellent in physical properties, particularly mechanical properties, required for the membrane sealing material can be formed. Furthermore, when the average hydroxyl value is 20 mgKOH/g or more and 300 mgKOH/g or less, productivity of the membrane sealing material, and furthermore, productivity of the hollow fiber membrane module can be improved.

The average hydroxyl value of the castor oil-based polyol may be 50 mgKOH/g or more, 70 mgKOH/g or more, 90 mgKOH/g or more, 110 mgKOH/g or more, 130 mgKOH/g or more, or 140 mgKOH/g or more, and may be 350 mgKOH/g or less, 330 mgKOH/g or less, 310 mgKOH/g or less, 290 mgKOH/g or less, or 270 mgKOH/g or less.

The average hydroxyl value is a value measured by a method using an acetylating reagent in accordance with JIS K 1557-1:2007.

Examples of the low molecular weight polyol include divalent polyols such as ethylene glycol, diethylene glycol, propylene glycol, 1,2-, 1,3- or 1,4-butanediol, 1,5-pentanediol, 3-methyl-1,5-pentanediol, 1,6-hexanediol, 1,8-octanediol, 1,10-decanediol, neopentyl glycol and hydrogenated bisphenol A, and 3 to 8 valent polyols such as glycerin, trimethylolpropane, hexanetriol, pentaerythritol, sorbitol and sucrose. The number average molecular weight of the low molecular weight polyol is preferably 50 or more and 200 or less.

Examples of the polyether-based polyol include an alkylene oxide (an alkylene oxide having 2 to 8 carbon atoms, for example, ethylene oxide, propylene oxide, butylene oxide, or the like) adduct of the low molecular weight polyol, a ring-opening polymer of an alkylene oxide, and the like. Specific examples thereof include polypropylene glycol, polyethylene glycol, polytetramethylene ether glycol, and a copolymer of ethylene oxide and propylene oxide. The number average molecular weight of the polyether-based polyol is preferably 200 or more and 7000 or less, and more preferably 500 or more and 5000 or less from the viewpoint of further excellent molding processability at the time of producing the membrane sealing material.

Examples of the polyester-based polyol include polyester-based polyols obtained by condensation polymerization of a polycarboxylic acid and a polyol.

Examples of the polycarboxylic acid used for the polyester polyol include aliphatic saturated, unsaturated polycarboxylic acids such as adipic acid, azelaic acid, dodecanedioic acid, maleic acid, fumaric acid, itaconic acid, dimerized linoleic acid, phthalic acid, isophthalic acid, and terephthalic acid, and aromatic polycarboxylic acids.

Examples of the polyol used for the polyester-based polyol include the above-mentioned low molecular weight polyols and polyether-based polyols.

The number average molecular weight of the polyester-based polyol is preferably 200 or more and 5000 or less, and more preferably 500 or more and 3000 or less. When the number average molecular weight of the polyester-based polyol is 200 or more and 5000 or less, molding processability at the time of forming a membrane sealing material is particularly excellent.

Examples of the polylactone-based polyol include polyols obtained by addition polymerization of ε-caprolactone, α-methyl-ε-caprolactone, ε-methyl-ε-caprolactone, β-methyl-δ-valerolactone, and the like to a polymerization initiator of glycols or triols in the presence of a catalyst such as an organometallic compound, a metal chelate compound, or a fatty acid metal acyl compound. The number average molecular weight of the polylactone-based polyol is preferably 200 or more and 5000 or less, and more preferably 500 or more and 3000 or less. When the number average molecular weight of the polylactone-based polyol is 200 or more and 5000 or less, the molding processability at the time of forming the membrane sealing material is particularly excellent.

Examples of the polyolefin-based polyol include polybutadiene and polybutadiene-based polyols in which a hydroxyl group is introduced at the end of a copolymer of butadiene and styrene or acrylonitrile. Other examples include a polyether ester polyol obtained by addition reaction of an alkylene oxide such as ethylene oxide or propylene oxide with a polyester having a carboxyl group and a hydroxyl group at the terminal.

Among them, in consideration of compatibility with the polyol (B), the active hydrogen-containing compound (a2) is preferably a castor oil-based polyol, and more preferably contains partially dehydrated castor oil. When the isocyanate component is used for a membrane sealing material of a membrane containing glycerin, the isocyanate component and glycerin may react with each other, and a low molecular reactant of the reaction product may be eluted into a liquid in contact with the membrane. When the active hydrogen-containing compound (a2) contains partially dehydrated castor oil, elution of a low molecular reactant can be further suppressed when the active hydrogen-containing compound (a2) is used as such a membrane sealing material.

The amount of the active hydrogen-containing compound (a2) used may be 3.0 parts by mass or more, 5.0 parts by mass or more, or 7.0 parts by mass or more, and may be 45.0 parts by mass or less, 40.0 parts by mass or less, 35.0 parts by mass or less, 30.0 parts by mass or less, 25.0 parts by mass or less, 20.0 parts by mass or less, or 15.0 parts by mass or less, with respect to 100 parts by mass of the total of the mass of the diphenylmethane diisocyanate (a1-1), the mass of the modified diphenylmethane diisocyanate (a1-2), and the mass of the active hydrogen-containing compound (a2).

### <<Content of Isocyanate Group>>

The content of isocyanate groups in the polyisocyanate prepolymer (A) is preferably 13.0 mass% or more and 27.0 mass% or less, more preferably 13.5 mass% or more and 26.5 mass% or less, and particularly preferably 14.0 mass% or more and 26.0 mass% or less. When the content of the isocyanate group in the polyisocyanate prepolymer (A) is within these ranges, the polyurethane resin is further excellent in molding processability and adhesive strength. The content of isocyanate groups in the polyisocyanate prepolymer (A) may be, for example, 13.0 mass% or more, 15.0 mass% or more, 17.0 mass% or more, 19.0 mass% or more, 21.0 mass% or more, 22.0 mass% or more, 23.0 mass% or more, or 24.0 mass% or more.

The content of isocyanate groups is the total content of isocyanate groups based on the total mass of the polyisocyanate prepolymer (A). The content of isocyanate groups is measured according to the method described in JIS K1603-1:2007.

### <<Urethane Group Concentration>>

The polyisocyanate prepolymer (A) preferably has a urethane group concentration of 0.1 mmol/g or more. The urethane group concentration is the concentration (unit: mmol/g) of urethane groups in the polyisocyanate prepolymer (A) based on the total mass of the polyisocyanate prepolymer (A). The urethane group concentration in the polyisocyanate prepolymer (A) can be calculated from the contents of the active hydrogen-containing compound and the isocyanate group-containing compound used to form the polyisocyanate prepolymer (A).

The urethane group concentration of the polyisocyanate prepolymer (A) may be 0.10 mmol/g or more, 0.15 mmol/g or more, or 0.20 mmol/g or more from the viewpoint of hardly causing molding shrinkage due to a small calorific value during molding and further improving the non-defective product rate, and may be 1.3 mmol/g or less, 1.1 mmol/g or less, 0.90 mmol/g or less, 0.70 mmol/g or less, 0.50 mmol/g or less, 0.40 mmol/g or less, or 0.30 mmol/g or less from the viewpoint of keeping the viscosity of the prepolymer within a range suitable for molding and further improving handling and filling properties.

### <<MDI Monomer Content>>

The MDI monomer content of the polyisocyanate prepolymer (A) may be 20 mass% or more, 30 mass% or more, 40 mass% or more, 50 mass% or more, or 55 mass% or more, and may be 70 mass% or less or 65 mass% or less, based on the total mass of the polyisocyanate prepolymer (A). MDI monomer content is measured by GPC (Gel Permeation Chromatography). Details of the measurement conditions are as described in Examples described later.

### <<Viscosity of Polyisocyanate Prepolymer (A)>>

The viscosity of the polyisocyanate prepolymer (A) at 25°C may be 7000 mPa·s or less, 5000 mPa·s or less, 3000 mPa·s or less, 1000 mPa·s or less, 800 mPa·s or less, 700 mPa·s or less, or 650 mPa·s or less, and may be 100 mPa·s or more, 200 mPa·s or more, 300 mPa·s or more, or 400 mPa·s or more.

### <<Urethanization Reaction>>

The polyisocyanate prepolymer (A) can be obtained by a urethanization reaction that is usually carried out. The urethanization reaction is preferably performed in a temperature range of 40°C or more and 80°C or less until a target NCO content is reached. When the reaction temperature is 40°C or higher, crystal precipitation of the MDI monomer can be more favorably suppressed, and when the reaction temperature is 80°C or lower, generation of a side reaction product can be further suppressed.

### <Polyol (B)>

The polyol (B) contains a transesterification product (b1) of a castor oil-based polyol and a hydroxyl group-containing amine-based compound, a hydroxyl group-containing amine-based compound (b2), and a castor oil-based polyol (b3).

### <<Transesterification Product (b1)>>

The transesterification product (b1) of the castor oil-based polyol and the hydroxyl group-containing amine-based compound is a reaction product obtained by transesterification reaction of the castor oil-based polyol and the hydroxyl group-containing amine-based compound.

The castor oil-based polyol used for the transesterification product (b1) is a castor oil-based polyol containing an ester bond, and specific examples thereof include the same as the castor oil-based polyol in the active hydrogen-containing compound (a2). The castor oil-based polyol used for the transesterification product (b1) is preferably castor oil because the transparency of the cured product is further excellent.

Examples of the hydroxyl group-containing amine-based compound used for the transesterification product (b1) include the same compounds as those of the hydroxyl group-containing amine-based compound (b2) described later. As the hydroxyl group-containing amine-based compound used for the transesterification product (b1), the same type of compound as the hydroxyl group-containing amine-based compound (b2) may be used, or a compound different from the hydroxyl group-containing amine-based compound (b2) may be used.

The hydroxyl group-containing amine-based compound to be used for the transesterification product (b1) is preferably an alkylene oxide adduct of an amino compound (diamino compound) such as ethylenediamine (For example, propylene oxide or ethylene oxide adducts), and more preferably N,N,N',N'-tetrakis[2-hydroxypropyl]ethylenediamine, because the hydroxyl group-containing amine-based compound accelerates curing, forms a cured product having a high crosslinking density, and has further excellent elution resistance.

The content of the transesterification product (b1) may be 0.15 mass% or more, 0.5 mass% or more, 0.8 mass% or more, or 1.0 mass% or more with respect to the polyol (B), and may be 1.5 mass% or more, 2.0 mass% or more, 3.0 mass% or more, or 4.0 mass% or more since a cured product in which appearance whitening is further suppressed is easily obtained. The content of the transesterification product (b1) may be 12 mass% or less, 10 mass% or less, 8 mass% or less, or 6 mass% or less with respect to the polyol (B) because of excellent curability.

The content of the transesterification product (b1) is 0.1 mass% or more and 10.0 mass% or less with respect to the total mass of the polyisocyanate prepolymer (A) and the polyol (B). The content of the transesterification product (b1) is more preferably 0.2 mass% or more and 9.0 mass% or less, and particularly preferably 0.3 mass% or more and 8.0 mass% or less with respect to the total mass of the polyisocyanate prepolymer (A) and the polyol (B) because a cured product in which appearance whitening is further suppressed is easily obtained. When the content of the transesterification product (b1) is within these ranges, the molding processability of the polyurethane resin and the suppression of the eluate are further excellent. The upper limit of the content of the transesterification product (b1) may be 7.0 mass% or less, 6.0 mass% or less, 5.0 mass% or less, 4.0 mass% or less, 3.0 mass% or less, 2.5 mass% or less, 2.0 mass% or less, or 1.5 mass% or less with respect to the total mass of the polyisocyanate prepolymer (A) and the polyol (B). The content of the transesterification product (b1) can be measured by liquid chromatography. Detailed measurement conditions may be as described in Examples described later.

The transesterification product (b1) can be produced, for example, by subjecting a castor oil-based polyol and a hydroxyl group-containing amine-based compound to a transesterification reaction in a reaction liquid containing a castor oil-based polyol, a hydroxyl group-containing amine-based compound, and a base. Examples of the base include sodium methoxide. The use amount of the base may be 0.01 to 1.00 parts by mass or 0.05 to 0.50 parts by mass with respect to 100 parts by mass of the total of the use amount of the castor oil-based polyol and the use amount of the hydroxyl group-containing amine-based compound.

The reaction temperature in the transesterification reaction may be, for example, 100°C or higher, 150°C or higher, or 180°C or higher, and may be, for example, 150 to 250°C or 180 to 220°C. The time for holding at the reaction temperature may be, for example, 3 hours or more, 5 hours or more, or 7 hours or more, and may be 5 to 10 hours. The transesterification reaction may be performed, for example, under a nitrogen atmosphere.

<<Hydroxyl Group-containing Amine-based Compound (b2)>> Examples of the hydroxyl group-containing amine-based compound (b2) include alkyl diethanolamines such as linear or branched butyl diethanolamine, hexyl diethanolamine, octyl diethanolamine, lauryl diethanolamine, myristyl diethanolamine, cetyl diethanolamine, and stearyl diethanolamine; low molecular polyamine; and amine compounds such as low molecular amino alcohols. More specific examples of amine compounds include oxyalkylated derivatives of amino compounds such as N,N,N',N'-tetrakis[2-hydroxypropyl]ethylenediamine and N,N,N',N'-tetrakis[2-hydroxyethyl]ethylenediamine, which are adducts of propylene oxide or ethylene oxide to ethylenediamine; mono-, di-, and triethanolamines; and amino alcohol derivatives such as N-methyl-N,N'-diethanolamine; and the like.

Among them, propylene oxide or ethylene oxide adduct of an amino compound such as ethylenediamine is preferable, and N,N,N',N'-tetrakis[2-hydroxypropyl]ethylenediamine is most preferable. By using N,N,N',N'-tetrakis[2-hydroxypropyl]ethylenediamine, further effects are exerted due to improvement of processability during molding, reduction of an eluate, and the like.

In addition, the content of the hydroxyl group-containing amine-based compound (b2) is preferably 1 mass% or more and 40 mass% or less, more preferably 5 mass% or more and 40 mass% or less, and particularly preferably 10 mass% or more and 35 mass% or less in the polyol (B). When the content of the hydroxyl group-containing amine-based compound (b2) in the polyol (B) is 5 mass% or more, the hydroxyl group-containing amine-based compound (b2) more favorably exerts its function and exhibits a further effect. When the proportion of the hydroxyl group-containing amine-based compound (b2) in the polyol (B) is 40 mass% or less, the initial reaction heat at the time of molding the polyurethane resin is suppressed, the workability is further improved and the filling properties is secured, and the hardness of the resulting membrane sealing material is further suppressed from becoming excessively high.

### <<Castor Oil-based Polyol (b3)>>

As the castor oil-based polyol (b3), the castor oil-based polyol mentioned in the active hydrogen-containing compound (a2) is preferably used. The castor oil-based polyol (b3) is preferably castor oil because it has a better balance between viscosity and crosslinking density.

The content of the castor oil-based polyol (b3) in the polyol (B) may be 50.0 mass% or more, 55.0 mass% or more, 60.0 mass% or more, or 65.0 mass% or more, and may be 98.8 mass% or less, 97.0 mass% or less, or 95.0 mass% or less from the viewpoint of moldability.

### <<Active Hydrogen-containing Compound (b4)>>

The polyol (B) may contain an active hydrogen-containing compound (Hereinafter, the compound is referred to as an "active hydrogen-containing compound (b4)".) other than the transesterification product (b1), the hydroxyl group-containing amine-based compound (b2), and the polyol (b3). As the active hydrogen-containing compound (b4), various polyols (excluding those corresponding to the transesterification product (b1), the hydroxyl group-containing amine-based compound (b2), and the castor oil-based polyol (b3)) listed above for the active hydrogen-containing compound (a2) can be used.

In the polyol (B), the mass ratio (Mb3)/(Mb4) of the content Mb3 of the castor oil-based polyol (b3) to the content Mb4 of the active hydrogen-containing compound (b4) is preferably 50/50 or more and 100/0 or less, and particularly preferably 100/0. That is, the polyol (B) is particularly preferably composed only of the transesterification product (b1), the hydroxyl group-containing amine-based compound (b2), and the castor oil-based polyol (b3).

The hydroxyl value of the polyol (B) is preferably 50 mgKOH/g or more and 1000 mgKOH/g or less, and more preferably 75 mgKOH/g or more and 750 mgKOH/g or less from the viewpoint of easy handling of the polyol (B). From the viewpoint of excellent molding processability and adhesive strength of the polyurethane resin, the hydroxyl value of the polyol (B) is most preferably 100 mgKOH/g or more and 500 mgKOH/g or less. From the viewpoint of ease of handling of the polyol (B), excellent molding processability of the polyurethane resin, adhesive strength, and the like, the hydroxyl value of the polyol (B) may be, for example, 150 mgKOH/g or more, 200 mgKOH/g or more, 250 mgKOH/g or more, 300 mgKOH/g or more, or 320 mgKOH/g or more, and may be 450 mgKOH/g or less, 400 mgKOH/g or less, or 350 mgKOH/g or less.

### <<Polyisocyanate Prepolymer (A)/Polyol (B) (molar ratio)>>

The ratio of the number of moles of isocyanate groups in the polyisocyanate prepolymer (A) to the number of moles of active hydrogen groups in the polyol (B) (isocyanate groups/active hydrogen groups) may be, for example, 0.95 to 1.10 or 1.00 to 1.05.

### <<MDI Monomer Content>>

The MDI monomer content of the polyurethane-resin-forming composition may be 10 mass% or more, 20 mass% or more, 45 mass% or less, or 40 mass% or less, based on the total mass of the polyisocyanate prepolymer (A) and the polyol (B). MDI monomer content is measured by GPC (Gel Permeation Chromatography). Details of the measurement conditions are as described in Examples described later.

### <Viscosity>

The polyurethane-resin-forming composition is preferably 400 mPa·s or more and 2000 mPa·s or less, where the viscosity after 60 seconds from the start of mixing the polyisocyanate prepolymer (A) and the polyol (B) is defined as a mixing viscosity. From the viewpoint of excellent molding processability of the polyurethane resin, the mixing viscosity is more preferably 600 mPa·s or more and 2000 mPa·s or less.

### <Pot Life>

When the time from the start of mixing of the polyisocyanate prepolymer (A) and the polyol (B) until the viscosity of the mixture reaches 50,000 mPa·s is defined as a pot life (unit: second), the pot life of the polyurethane-resin-forming composition may be 100 seconds or more and 3000 seconds or less, or 60 seconds or more and 9000 seconds or less.

The polyurethane-resin-forming composition described above exhibits good rapid curability, and the appearance whitening of the cured product is suppressed. Therefore, the polyurethane-resin-forming composition according to an embodiment of the present disclosure contributes to the preparation of a membrane sealing material that contributes to the preparation of a molded body in which whitening of the appearance is suppressed. That is, the polyurethane-resin-forming composition is a polyurethane-resin-forming composition for a membrane sealing material suitable for use as a membrane sealing material.

### <Method for Producing Polyurethane-resin-forming Composition>

The polyurethane-resin-forming composition according to an embodiment of the present disclosure can be produced by a method including preparing the polyisocyanate prepolymer (A) described above and preparing the polyol (B) described above.

### <Cured Product>

A cured product according to an embodiment of the present disclosure is a cured product of the polyurethane-resin-forming composition described above. The degree of whiteness of the cured product may be 11.0 or less or 10.5 or less. The degree of whiteness is measured by the method actually described later.

### [Membrane Sealing Material]

The membrane sealing material according to an embodiment of the present disclosure includes a cured product of the polyurethane-resin-forming composition for a membrane sealing material described above.

The membrane sealing material can be suitably formed by reacting and curing an isocyanate component constituting the polyisocyanate prepolymer (A) and a polyol component constituting the polyol (B) under a temperature condition of 0°C or higher and 100°C or lower, preferably 20°C or higher and 95°C or lower, and more preferably 30°C or higher and 90°C or lower. The temperature condition of the reaction may be 80°C or lower, 70°C or lower, 60°C or lower, or 25°C or higher. Although it is possible to shorten the gelation time by forming the membrane sealing material in a high temperature range, molding shrinkage easily occurs, and there is a problem that other members such as hollow fibers are thermally deteriorated, and therefore forming that does not reach a high temperature is preferable.

### [Membrane Module]

A membrane module according to an embodiment of the present disclosure includes a main body, a membrane, and a membrane sealing material that seals a gap between the main body and the membrane. The membrane is a plurality of hollow fiber membranes. The membrane sealing material is the membrane sealing material described above. The membrane sealing material preferably seals a gap between the main body and at least a part of the plurality of hollow fiber membranes and at least a part of a gap between the plurality of hollow fiber membranes.

A membrane module according to an embodiment of the present disclosure will now be described in more detail with reference to the drawings.

FIG. 1 is a conceptual diagram showing an example of a configuration of a membrane module according to an embodiment of the present disclosure. A membrane module (hollow fiber membrane module) 100 shown in FIG. 1 includes a housing (main body) 11, and a plurality of hollow fiber membranes (membranes) 13 are filled in the housing. For example, in the case of a hollow fiber membrane module used as a dialyzer, thousands to tens of thousands of hollow fiber membranes are filled.

The housing 11 has a cylindrical shape. Membrane sealing materials 19 are provided at both ends (left and right ends in FIG. 1) inside the housing 11. The membrane sealing material fills and seals the gap between hollow fiber membranes 13 and the gap between hollow fiber membranes 13 and the inner wall of housing 11, and binds the plurality of hollow fiber membranes 13.

In addition, a first fluid inlet 15 and a first fluid outlet 17 are provided on a side surface of the housing 11, and the first fluid (gas or liquid) flows into and out of the housing 11 through the first fluid inlet 15 and the first fluid outlet 17. The first fluid flowing in from the first fluid inlet 15 passes through the gap (outside the hollow fiber membranes) while being in contact with the plurality of hollow fiber membranes 13 filled in the housing 11, and is discharged from the first fluid outlet 17. Since the membrane sealing material 19 is not present inside the hollow fiber membrane 13, a second fluid (gas or liquid) flows in and out of the hollow fiber membrane 13 through a second inlet (one end side) and a second outlet (the other end side) provided in a cap member (not illustrated). Contact between the first fluid and the second fluid via hollow fiber membranes 13 causes mass transfer from one fluid to the other fluid (or from the other fluid to the one fluid). For example, in the case of a hollow fiber membrane type dialyzer, when the dialysate and blood come into contact with each other, waste products and excessive moisture in the blood move to the dialysate.

The membrane module 100 shown in FIG. 1 includes a plurality of hollow fiber membranes 13, and the membrane sealing material 19 seals the gap at both ends thereof. However, the membrane module according to the present embodiment is not limited to such a configuration at all. For example, a plurality of or a single membrane having various shapes such as a flat membrane and a spiral membrane may be used. In addition, the membrane sealing material is not limited to be provided at both ends of the membrane, and may be provided only at a part of the membrane (one end in the case of a hollow fiber shape), or may be provided at all the ends of the membrane, for example, all the outer edges of the flat membrane. Furthermore, the sealing material may be provided at a part other than the end of the membrane to seal. In addition, the housing 11 of the membrane module 100 shown in FIG. 1 has a cylindrical shape, but may have any shape other than the cylindrical shape.

In the membrane module 100, the gap between the hollow fiber membranes 13 at the end of the bundled body of the plurality of hollow fiber membranes 13 is sealed with the polyurethane-resin-forming composition for a membrane sealing material described above, and the composition is cured to form the membrane sealing material described above (the gap between the hollow fiber membranes is sealed by the membrane sealing material).

The membrane module according to an embodiment of the present disclosure can be suitably used as a module for medical use or water treatment because the generation of an extract is well suppressed. Specific examples of the membrane module include a plasma separation device, an oxygenator, an artificial kidney, an artificial liver, and a home and industrial water treatment device.

### Examples

Hereinafter, the present disclosure will be described based on examples, but the present disclosure is not to be construed as being limited to these examples. In the following description, "%" means "mass%" unless otherwise specified. The term "OHV" represents a hydroxyl value.

The following components were used in the examples and comparative examples.

### [Polyisocyanate Prepolymer (A)]

- a1-1; 4,4'-MDI (manufactured by Tosoh Corporation, product name: Millionate MT, isocyanate group content = 33.6%)
- a1-2; 4,4'-MDI carbodiimide-modified product (manufactured by Tosoh Corporation, product name: Millionate MTL-C, isocyanate group content = 28.6%, carbodiimide uretonimine modified product content = 30%, isomer = about 1%)
- a2; Castor oil (manufactured by ITOH OIL CHEMICALS CO.,LTD., product name: URIC H-30, OHV = 160 mgKOH/g, viscosity (25°C) = 690 mPa·s)

### [Polyol (B)]

- b1'; Transesterification product containing polyol including transesterification product of castor oil and N,N,N',N'-tetrakis[2-hydroxypropyl]ethylenediamine (the following transesterification product-containing polyol: polyol obtained in Synthesis Example 1, OHV = 334 mgKOH/g, b1 content below = 66 mass%)
- b1; Transesterification product of castor oil and N,N,N',N'-tetrakis[2-hydroxypropyl]ethylenediamine
- b2; N,N,N',N'-tetrakis[2-hydroxypropyl]ethylenediamine (manufactured by ADEKA CORPORATION, product name: EDP-300, OHV = 760 mgKOH/g, viscosity (25°C) = 50,000 mPa·s)
- b3; Castor oil (manufactured by ITOH OIL CHEMICALS CO.,LTD., product name: URIC H-30, OHV = 160 mgKOH/g, viscosity (25°C) = 690 mPa·s)

### <Synthesis Example 1 of Transesterification Product-containing Polyol>

To a 2 liter four-necked flask equipped with a stirrer, a thermometer, a heating device, and a dropping funnel were added 710 parts by mass of castor oil (Manufactured by ITOH OIL CHEMICALS CO.,LTD., product name: URIC H-30), 290 parts by mass of N,N,N',N'-tetrakis[2-hydroxypropyl]ethylenediamine, and 1 part by mass of sodium methoxide, and the mixture was heated to 200°C under a nitrogen stream and then reacted for 8 hours to obtain a transesterification product. The obtained transesterification product had a hydroxyl value of 334 mgKOH/g and a transesterification product content of 66 mass%.

### <Production Examples 1 to 5 of Polyisocyanate Prepolymer (A)>

a1-1 and a1-2 and a2 were charged according to the compounding ratio shown in Table 1, and reacted by stirring and mixing at 70°C for 4 hours to synthesize polyisocyanate prepolymers (A-1) to (A-3).

**[Table 1]**

| Main agent | | Production Example 1 | Production Example 2 | Production Example 3 |
|---|---|---|---|---|
| | | A-1 | A-2 | A-3 |
| Composition | a1-1 (g) | 41 | 54 | - |
| | a1-2 (g) | 883 | 845 | 1000 |
| | a2 (g) | 76 | 101 | - |
| Properties | NCO content (%) | 25.7 | 24.8 | 28.6 |
| | MDI monomer content (%) | 61.5 | 58.7 | 70.0 |
| | Urethane group concentration (mmol/g) | 0.22 | 0.29 | 0.00 |
| | Viscosity (mPa·s; 25°C) | 420 | 600 | 50 |

### <Preparation Examples 1 to 3 of Polyol (B)>

Each raw material shown in Table 2 was charged according to the blending ratio, and stirred and uniformly mixed to obtain polyols (B-1) to (B-3).

**[Table 2]**

| Curing agent | | Preparation Example 1 | Preparation Example 2 | Preparation Example 3 |
|---|---|---|---|---|
| | | B-1 | B-2 | B-3 |
| Composition | b1' (parts by mass) | 1.0 | 4.4 | - |
| | b2 (parts by mass) | 28.5 | 26.8 | 29.0 |
| | b3 (parts by mass) | 70.5 | 68.8 | 71.0 |
| b1 (mass%) | | 0.7 | 2.9 | - |
| Properties | Hydroxyl value (KOHmg/g) | 334 | 334 | 334 |

### <Examples 1 to 4 and Comparative Examples 1 to 4>

A polyisocyanate prepolymer (main agent) and a polyol (curing agent) having the composition shown in Table 3 were mixed to mold a polyurethane-resin-forming composition. The values shown in Table 3 were calculated from the following test results.

### [Measurement of NCO Content]

In the polyisocyanate prepolymers (A-1) to (A-3) shown in Table 1, the NCO content was determined in accordance with JIS K1603-1:2007.

### [Measurement of MDI Monomer Content]

In the polyisocyanate prepolymers (A-1) to (A-3) shown in Table 1, the content (mass%) of the MDI monomer was determined by GPC (Gel Permeation Chromatography; Gel Permeation Chromatography) measurement under the following conditions and methods.

### <Measurement Conditions>

(1) Measuring apparatus: "HLC-8120 (trade name)" (manufactured by Tosoh Corporation)
(2) Column temperature: 40°C
(3) Detector: RI (refractive index) meter
(4) Column: A column packed with three kinds of TSKgel G3000HXL, TSKgel G2000HXL, and TSKgel G1000HXL(All are trade names, manufactured by Tosoh Corporation) as fillers was connected in series and measured.
(5) Eluent: tetrahydrofuran (THF) (flow rate: 1 mL/min, 40°C)
(6) Calibration curve: polystyrene of the following grades (TSK standard POLYSTYRENE; A calibration curve was obtained using (manufactured by Tosoh Corporation).
   F-2 (1.81 × 10⁴) F-1 (1.02 × 10⁴) A-5000 (5.97 × 10³) A-2500 (2.63 × 10³) A-500(Mw = 6.82 × 10², 5.78 × 10², 4.74 × 10², 3.70 × 10², 2.66 × 10²) Toluene (Mw = 92)
(7) Sample: THF 10mL solution containing 0.05 g of a sample

### <Measurement Method>

First, a calibration curve was obtained from a chart obtained by detecting polystyrene as a standard substance by a refractive index difference. Next, for each sample, the mass% of the peak near the peak top molecular weight (number average molecular weight) of 230 indicating the MDI monomer was determined from the chart obtained by detecting the difference in refractive index based on the same calibration curve.

### [Measurement of Content of Transesterification Product of Castor Oil and N,N,N',N'-tetrakis[2-hydroxypropyl]ethylenediamine]

In the polyols (B-1) to (B-2) shown in Table 2, the measurement (mass%) of the content of a transesterification product of castor oil and N,N,N',N'-tetrakis[2-hydroxypropyl]ethylenediamine was determined by liquid chromatography (LC) measurement under the following conditions and methods.

### <Measurement Conditions>

(1) Measuring apparatus: "Agilent1290 Infinity II series (trade name)" (manufactured by Agilent Technologies)
(2) Column: TSKgel ODS-100V(Trade name: manufactured by Tosoh Corporation) as filler
(3) Column temperature: 40°C
(4) Detector: evaporative light scattering detector (ELSD) G4260B (manufactured by Agilent Technologies)
(5) Mobile phase: 10mM ammonium acetate-methanol
   Ammonium acetate (special grade, manufactured by FUJIFILM Wako Pure Chemical Corporation)
   Methanol (for HPLC manufactured by FUJIFILM Wako Pure Chemical Corporation)
(6) Flow rate: 0.4 mL/min
(7) Sample concentration: 1.0 mg/mL
(8) Injection amount: 10 µL

### <Measurement Method>

First, a calibration curve other than the transesterification product was obtained from a chart obtained by detecting castor oil and N,N,N',N'-tetrakis[2-hydroxypropyl]ethylenediamine as standard substances by ELSD chromatogram. Next, for each sample, mass% of the amount of castor oil and N,N,N',N'-tetrakis[2-hydroxypropyl]ethylenediamine was determined from a chart obtained by detection by ELSD chromatogram based on the same calibration curve, and mass% of peaks indicating other transesterification products was determined.

In Examples 1 to 4 and Comparative Examples 1 to 4, the measurement method of each physical property value was as follows.

### <Mixing Viscosity/Pot Life Test>

The mixing viscosity and pot life at the time of obtaining a resin cured product were determined by the following method.

The main agents (A-1) to (A-3) and the curing agents (B-1) to (B-3) were combined as shown in Table 3, and weighed and mixed so as to be 50 g in total in a mixture having a liquid temperature of 45°C and isocyanate groups/active hydrogen groups = 1.00 to 1.05 (molar ratio). Subsequently, the viscosity of the mixture was measured using a rotational viscometer (B-type, No. 4 rotor) under an atmosphere at 25°C. The viscosity after 60 seconds elapsed from the start of mixing of the main agent and the curing agent was defined as a mixing viscosity, and the time until the viscosity of the mixture reached 50,000 mPa·s was defined as a pot life (seconds). When the mixing viscosity was 2000 mPa·s or less, the filling properties was determined to be good, and further, when the pot life was within 1700 seconds, the curability was determined to be good.

### <Appearance Evaluation>

The polyurethane-resin-forming compositions for a membrane sealing material according to the combinations shown in Table 3 were each defoamed under reduced pressure at 10 to 20 kPa for 3 minutes, and then poured into a stainless steel mold (100 mm × 100 mm × 8 mm). This was statically cured at 45°C for 2 days, and then demolded to obtain a cured product. The appearance of the obtained cured product was visually evaluated, and a cured product having no turbidity was rated as A, a cured product having even slight turbidity was rated as B, and a cured product having cloudiness was rated as C.

### <Degree of Whiteness>

### - Preparation of sample for evaluation of degree of whiteness

A sample for evaluation of degree of whiteness was obtained by a method similar to the method described in the appearance evaluation.

### - Evaluation of degree of whiteness

The degree of whiteness of the obtained sample for degree of whiteness evaluation was measured. The degree of whiteness was measured according to JIS-P8123. The degree of whiteness is preferably 10 or less, and more preferably 8 or less.

**[Table 3]**

| | | Exam ple 1 | Exam ple 2 | Exam ple 3 | Exam ple 4 | Compara tive Example 1 | Compara tive Example 2 | Compara tive Example 3 | Compara tive Example 4 |
|---|---|---|---|---|---|---|---|---|---|
| Main agent | | A-1 | A-1 | A-2 | A-2 | A-1 | A-2 | A-3 | A-3 |
| Curing agent | | B-1 | B-2 | B-1 | B-2 | B-3 | B-3 | B-2 | B-3 |
| Main agent/Curing agent (molar ratio) | | 1.03 | 1.03 | 1.03 | 1.03 | 1.03 | 1.03 | 1.01 | 1.01 |
| Urethane group concentration of main agent (mmol/g) | | 0.11 | 0.11 | 0.15 | 0.15 | 0.11 | 0.15 | 0.00 | 0.00 |
| In system | Monomer MDI (%) | 30.7 | 30.7 | 29.9 | 29.9 | 30.7 | 29.9 | 32.9 | 32.9 |
| | Transesterification product content (%) | 0.4 | 1.5 | 0.3 | 1.4 | 0.0 | 0.0 | 1.5 | 0.0 |
| Mixing viscosity (mPa·s) | | 1510 | 1250 | 1580 | 1350 | 1690 | 1780 | 910 | 1460 |
| Pot life | | 165 | 173 | 171 | 180 | 160 | 166 | 164 | 147 |
| Degree of whiteness | | 9.9 | 7.4 | 8.8 | 7.4 | 22.5 | 11.9 | 24.2 | 48.6 |
| Appearance of molded product | | A | A | A | A | B | B | B | C |

### Reference Signs List

- 11: Housing

- 13: Hollow fiber membrane
- 15: First fluid inlet
- 17: First fluid outlet
- 19: Membrane sealing material
- 100: Membrane module (hollow fiber membrane module)

## Claims

1. A polyurethane-resin-forming composition comprising
a polyisocyanate prepolymer (A) and
a polyol (B),
wherein the polyisocyanate prepolymer (A) comprises a reaction product of
diphenylmethane diisocyanate (a1-1) and/or modified diphenylmethane diisocyanate (a1-2), and
an active hydrogen-containing compound (a2),
the polyol (B) comprises
a transesterification product (b1) of a castor oil-based polyol and a hydroxyl group-containing amine-based compound,
a hydroxyl group-containing amine-based compound (b2), and
a castor oil-based polyol (b3),
a content of the transesterification product (b1) is 0.1 mass% or more and 10 mass% or less with respect to a total mass of the polyisocyanate prepolymer (A) and the polyol (B).

2. The polyurethane-resin-forming composition according to claim 1, wherein the polyisocyanate prepolymer (A) has a urethane group concentration of 0.1 mmol/g or more.

3. The polyurethane-resin-forming composition according to claim 1, wherein the reaction product comprises at least a reaction site between a modified diphenylmethane diisocyanate (a1-2) containing a carbodiimide-modified diphenylmethane diisocyanate and a uretonimine-modified diphenylmethane diisocyanate and an active hydrogen-containing compound (a2).

4. The polyurethane-resin-forming composition according to any one of claims 1 to 3, which is for a membrane sealing material.

5. A membrane sealing material comprising a cured product of the polyurethane-resin-forming composition according to claim 4.

6. A membrane module comprising:
a main body;
a membrane; and
a membrane sealing material that seals a gap between the main body and the membrane,
wherein the membrane sealing material is the membrane sealing material according to claim 5.

7. The membrane module according to claim 6, wherein
the membrane is a plurality of hollow fiber membranes,
the membrane sealing material seals the gap between the main body and at least a part of the plurality of hollow fiber membranes, and at least a part of a gap between the hollow fiber membranes.
